# EUROPEAN PATENT APPLICATION

(11) **EP 3 315 568 A1**
(43) Date of publication of application: **02.05.2018**
(21) Application number: 15782660.3
(22) Date of filing: 24.06.2015
(51) Int. Cl.: C09D 129/00, C09D 4/06

(54) **FORMULATION OF A NANOSCALE COLOUR PREPARATION AND PRODUCTION METHOD THEREOF**

(71) Applicant: Eigenmann & Veronelli Iberica S.L., 08008 Barcelona (Barcelona) (ES)
(72) Inventor: CAMPRUBI RICARDO, Clara, 08008 Barcelona (Barcelona) (ES)
(74) Representative: Diaz Nunez, Joaquin
(86) International application number: PCT/ES2015/000082
(87) International publication number: WO 2015/162317

(57) **Abstract**

The formulation comprises the following components (expressed as weight percent): between 12 and 24 % pigments; between 12 and 24 % wetting agent - dispersant; between 30 and 40 % solvent; and between 12 and 46 % resin. The flash point of the solvent is above 65 °C, thereby allowing the dispersion of the pigment particles at a temperature of between 50 and 60 °C. The invention also relates to a method for obtaining the aforementioned formulation.

## Description

### Object of the invention

The object of the present invention is a formulation of a nanoscale colour preparation and production method thereof; allowing improving the stability of the nanoscale colour preparations, so that they are maintained under suitable conditions for use for a period not less than 12 months.

### Field of application of the invention

This invention is applicable to the manufacture of nanoscale colour preparations for paints and the like.

### State of the art

The production of paints and the like, for high quality finishing (automobiles, electronics.....), requires solid products, such as pigments and fillers, with the smallest possible particle size; the range between 5 and 15 micron (thousandths of a millimetre) being considered as overall limits.

The emergence of pigment preparations or colour bases (including white) in nanoscale form, with particle size below 1 micron, has led to a significant improvement in the manufacture of high-quality paints and the like, since a smaller particle corresponds to higher pigment and/or filler performance, and better overall stability, uniquely in the effect of stresses on the film due to the heat/cold, moisture condensation, etc.

The main drawback of these preparations or colour bases is that they have a very limited stability and this requires that they are transformed into the final product, in a relatively short time; in the order of thirty days.

The nanoscale preparations are formulated with the following basic elements: pigment, wetting agent-dispersant, binder resin and solvent.

The dispersants are composed of polymers with functional groups related to the pigment, notable examples being: Solsperse 17,000 from Lubrizol, Ltd., Byk 108 (Byk Chemi), Efka 207 (Efka), and the like.

The amount to be used depends on the pigment and/or filler, with the ranges of use, according to the data provided by the manufacturers of these additives, being:

| | |
|---|---|
| Inorganic pigments | 1 - 2 % |
| Organic pigments | 15 - 20 % |
| Black and/or high-surface pigments | 40 - 80 % |

Some of the most popular resins are: Laropal (Basf), Polyester (Setal), vinyl VYHH (Wacker), and the like.

Solvents are a combination of aromatic naphtha with butyl acetate, butanol, methoxypropyl acetate (MPA), and the like; in these applications being used solvents with a flash point below 55 °C. In the traditional system, it is prevented during the dispersion of pigment from exceeding 40 °C due to the evident risk of inflammation of the solvent, which also limits the quality of dispersion.

Pigments comprise the range from white to black, being mostly organic, except the two mentioned.

Preparations or colour pastes thus obtained have a good compatibility with the binders used in the final formulation.

The ratio of nanoscale paste is 10 to 30 % to the total amount of product.

Nanoscale colour pastes mentioned have a limited stability and are converted into final product by adding binder, solvents and surface additives, in a short time, usually between immediate and 30 days, the existence of background relating to the obtaining of nanoscale pastes that remain stable for a greater period of time being unknown to the applicant of the invention.

### Description of the invention

The invention includes a formulation of a nanoscale colour preparation and production method thereof, with characteristics oriented towards to obtain a nanoscale colour preparation with improved stability of at least 12 months, avoiding that the final product should be prepared in a relatively short time, such as with currently known colour pastes.

The nanoscale colour paste of the invention includes in its formulation: pigments, wetting agent - dispersant, resin and solvent, being characterized by using said components in percentages by weight specified below: between 12 and 24 % pigments; between 12 and 24 % wetting agent-dispersant; between 30 and 40 % solvent; and between 12 and 46 % resin and by using a solvent with a flash point above 65 °C, allowing the dispersion of the pigment particles at a temperature of between 50 and 60 °C, without the risk of inflammation, with much greater efficiency and a better final dispersion than those achieved in the state of the art.

In a preferred embodiment the solvent used is a combination of butyl glycol acetate, with 2-ethoxy ethyl ether and aromatic naphthas.

The production method of nanoscale colour preparations of the invention with the components listed above includes:
a) a first step of wetting and pre-dispersion of pigment which includes:
   - the preparation of a paste or dispersion using 100 % pigment, up to 50 % solvent, 100 % resin of the formulation, and 50 % wetting agent-dispersant;
   - stirring the product to over 40 °C.
   - the application of ultrasound, maintaining the dispersion at a temperature between 40 and 60 °C, and
   - the milling of the paste to achieve a reduction of particles until they reach a size comprised between 0.2 and 0.4 micron;
b) a second step of stabilization of the dispersion or paste obtained previously; wherein:
   - said dispersion is kept at a temperature of 50 to 55 °C and is poured over the rest of the wetting agent-dispersant and solvent,
   - the product is initially homogenized with stirring between 100 and 150 r.p.m. for a period comprised between 60 and 120 minutes, and then with ultrasounds for a period comprised between 30 and 60 minutes, keeping the temperature above 35 °C, and
   - the dispersion is filtered removing from product the particles having a sized over 0.5 micron.

The milling of the product is carried out with grinding balls with a size of the range of particle size to be obtained.

Therefore, the basic differences with respect to the traditional method are: ultrasounds are used in both the initial and final phase. Higher flash point solvents are used to operate above 55 °C-60 °C.

These solvents allow increasing between 10 and 20 °C the temperature of the process in relation to current techniques, which substantially improves the homogeneity of the preparation.

The amount of wetting agents-dispersants is 200- 225 % higher compared to that used in conventional methods, but added in two steps:
In the first step the particle of pigment "D50" of 50-75 micron is reduced, to the margin of 0.2 to 0.4 micron ("D50" means that half of the particles are in this range).

In the second step, the dispersion is stabilized by the addition of, roughly, the same amount at a temperature higher than normal (+10 °C to +15 °C) and the dilution is maintained for a period of time greater than 30-60 minutes.

The stability test is done by measuring the viscosity within 24 hours and after 72 hours at 50 °C. Not supported an increase exceeding 75%, measured in cps (centipoises).

### Preferred embodiment of the invention

As a specific example of embodiment, to obtain 100 kg of a nanoscale colour preparation, according to the method of the invention
- 14 kg of black high density pigment;
- 37 kg of resin;
- 35 kg of solvent with flash point above 65 °C;
- 14 kg of wetting agent-dispersant
are used.

In a first step, the whole pigment and resin, and half of the solvent and the wetting agent-dispersant are put in a suitable tank; that is:
- 14 kg of pigment
- 37 kg of resin
- 17,5 kg of solvent
- 7 kg of dispersant-wetting agent

It is stirred progressively to reach 500 r.p.m and exceed 40 °C.

Ultrasounds are applied for 30 minutes, keeping the temperature between 40 °C and 60 °C.

The milling of the product takes place in closed-loop with loopback during 8-15 hours.

After 4 hours, a sample is taken and the particle size is assessed, which should be adjusted from 0.3 to 0.5 micron.

Once the desired particle size is reached, in a second step, the dispersion obtained is diluted in a proper tank with the remaining amounts of solvent and wetting agent-dispersant, that is, with:
- 17,5 kg of solvent
- 7 kg of dispersant-wetting agent

This mixture is subjected to reduced stirring (100-150 r.p.m) for 80 minutes. Ultrasounds are applied to the final mixture to achieve a maximum homogenisation. It is finally filtered with ceramic filter to remove particles above 0.5 microns.

## Claims

1. Formulation of a nanoscale colour paste; comprising: pigments, wetting agent - dispersant, solvent and solvent, **characterized in that** it comprises the percentages by weight of the components specified below: between 12 and 24 % pigments; between 12 and 24 % wetting agent-dispersant; between 30 and 40 % solvent; and between 12 and 46 % resin; and **in that** the solvent has a flash point above 65 °C allowing the dispersion of the pigment particles at a temperature of between 50 and 60 °C.

2. Formulation according to claim 1, **characterized in that** the solvent used is a combination of butyl glycol acetate, with 2-ethoxy ethyl ether and aromatic naphthas.

3. Procedure for obtaining nanoscale colour preparations; according to formulation of previous claims; **characterized in that** it comprises the following steps:
a) a first step of wetting and pre-dispersion of pigment which includes:
- the preparation of a paste or dispersion using 100 % pigment, up to 50 % solvent, 100 % resin of the formulation, and 50 % wetting agent-dispersant;
- stirring the product to over 40 °C.
- the application of ultrasound, maintaining the dispersion at a temperature between 40 and 60 °C, and
- the milling of the paste to achieve a reduction of particles until they reach a size comprised between 0.2 and 0.4 micron;
b) a second step of stabilization of the dispersion or paste obtained previously; wherein:
- said dispersion is kept at a temperature of 50 to 55 °C and is poured over the rest of the wetting agent-dispersant and solvent,
- the product is initially homogenized with stirring between 100 and 150 r.p.m. for a period comprised between 60 and 120 minutes;
- it is stabilized with ultrasounds for a period comprised between 30 and 60 minutes, keeping the temperature above 35 °C, and
- the dispersion is filtered removing from product the particles having a sized over 0.5 micron.
